# NEUE EUROPÄISCHE PATENTSCHRIFT

(11) **EP 0 314 915 B2**
(45) Veröffentlichungstag und Bekanntmachung des Hinweises auf die Entscheidung über den Einspruch: **08.05.1996**
(45) Hinweis auf die Patenterteilung: 06.05.1992
(21) Anmeldenummer: 88115792.9
(22) Anmeldetag: 26.09.1988
(51) Int. Cl.: B01D 35/14, F01M 1/10

(54) **Ölfilter für die Reinigung von Schmieröl**
Filter for the purification of lubricating oil
Filtre permettant la purification des huiles de graissage

(30) Priorität: 04.11.1987 DE 8714656 U
(43) Veröffentlichungstag der Anmeldung: 10.05.1989
(60) Teilanmeldung: 89100858.3
(73) Patentinhaber: Ing. Walter Hengst GmbH & Co. KG, D-48147 Münster (DE)
(72) Erfinder: Baumann, Dieter, D-4402 Greven-Gimbte (DE); Prinz, Norbert, D-4402 Greven 1 (DE)
(74) Vertreter: Schulze Horn, Stefan, Dipl.-Ing. M.Sc.

(56) Entgegenhaltungen:
- DE-A- 3 344 568
- DE-A- 3 422 482
- DE-A- 3 538 589
- DE-B- 1 180 717
- DE-C- 3 543 437
- FR-A- 2 566 045

## Beschreibung

Die Erfindung betrifft einen Ölfilter für die Reinigung von Schmieröl, insbesondere für Verbrennungsmotoren von Kraftfahrzeugen, mit einem im Einbauzustand zumindest annähernd stehend angeordneten Filtergehäuse mit einem mit diesem verschraubbaren Deckel, ferner mit einer in das Filtergehäuse eingesetzten ringförmigen Ölfilterpatrone, ferner mit einem Öleinlaß für die Ölfilterpatrone umströmendes, verunreinigtes Öl und mit einem mit dem zentralen Innenbereich des Filtergehäuses verbundenen Ölauslaß für gereinigtes Öl in einem Sockel am unteren Ende des Filtergehäuses, ferner mit einem durch Herausnehmen der Ölfilterpatrone mit dem Einlaßraum des Filtergehäuses verbindbaren Ableitungskanal am unteren Ende des Filtergehäuses und mit einem Verschlußglied, das den Ableitungskanal gegenüber dem Filtergehäuse verschließt, wobei das Verschlußglied ein in dem Ableitungskanal in axialer Richtung verschieblicher Ventilkörper ist, der zusammen mit wenigstens einem Einsprung des Ableitungskanals ein Ventil bildet, wobei der Ventilkörper durch eine erste, schwächere Feder in Öffnungsrichtung vorbelastet ist und der Ventilkörper in Schließrichtung durch eine zweite, stärkere Feder vorbelastet ist, die sich bei in das Filtergehäuse eingesetzter Filterpatrone an deren dem Ventilkörper zugewandter Stirnseite abstützt.

Aus der DE-A-3 422 482 geht bereits ein Ölfilter der vorstehend genannten Art hervor, bei dem allerdings der Deckel über eine zusätzliche starke Feder auf die Filterpatrone einwirkt.

Aus der DE-C-3 543 437 ist ein weiterer Ölfilter bekannt, der zwei Gehäuseteile aufweist, die über eine mittige Schraube miteinander verspannt werden. Die Teile selbst können nicht miteinander verschraubt werden.

Bei diesem Filter ist nachteilig eine Ableitung des im Gehäuse befindlichen Öls beim Wechsel der Filterpatrone nicht vorgesehen und möglich und zwischen dem oberen Gehäuseteil und der Filterpatrone besteht eine lösbare Verbindung, die die Montage des Filters erleichtern soll.

Es stellt sich daher die Aufgabe, einen Ölfilter der eingangs genannten Art zu schaffen, der die aufgeführten Nachteile vermeidet, kostengünstiger herstellbar ist und bei Patronenwechsel den Abfluß des im Filter vorhandenen Öls erlaubt.

Die Lösung dieser Aufgabe gelingt erfindungsgemäß durch einen Ölfilter der eingangs genannten Art, welcher dadurch gekennzeichnet ist, daß sich der Deckel über mindestens ein Abstützglied auf der deckelzugewandten Stirnseite an der in das Gehäuse eingesetzten Filterpatrone im direkten Kontakt abstützt und so die Innenfläche des Dekkels eine in axialer Richtung wirkende Kraft auf die Filterpatrone ausübt und der Deckel und die Filterpatrone eine Übertragung von axialen Kräften von beiden Richtungen auf die Filterpatrone ermöglichend miteinander verrastet sind.

Mit dieser Aufgabenstellung wird dafür gesorgt, daß bei einem Lösen des Deckels, z.B. durch Abschrauben, die Filterpatrone synchron mitbewegt und während des Lösevorganges des Deckels bereits ein Stück weit aus dem Gehäuse gezogen wird. Hierdurch wird der Ableitungskanal frühzeitig freigegeben und das im Filtergehäuse befindliche Öl hat ausreichend Zeit, aus dem Gehäuse durch den Ableitungskanal abzufließen, z.B. in eine Motorölwanne.

Eine bevorzugte Verbindungsweise von Deckel und Filterpatrone besteht darin, daß der Deckel an seiner Innenseite mehrere auf einem Kreis angeordnete, in das Filterinnere vorragende Federzungen mit Rastvorsprüngen aufweist und daß die Filterpatrone an ihrem deckelseitigen Ende eine kreisförmige oder mehrere auf einem Kreis angeordnete Rastausnehmungen für die Rastvorsprünge aufweist.

Die Rastausnehmung in der Filterpatrone ist zweckmäßig eine kreisrunde, taillierte Vertiefung in der Stirnseite der Patrone. Mit diesen Mitteln wird eine einfach lösbare Verbindung zwischen Deckel und Filterpatrone geschaffen. Zugleich wird so erreicht, daß der Wechsel der Filterpatrone einfacher und mit geringerer Verschmutzungsgefahr durchführbar ist. Außerdem ist der Deckel so wiederverwendbar.

Ein bevorzugtes Ausführungsbeispiel der Neuerung wird im folgenden anhand einer Zeichnung erläutert. Die Figuren der Zeichnung zeigen:
- Figur 1: einen Ölfilter mit eingesetzter Filterpatrone im Längsschnitt. teils in Ansicht und
- Figur 2: den Ölfilter aus Figur 1 mit teilweise herausgezogener Filterpatrone in der gleichen Darstellungsweise wie in Figur 1.

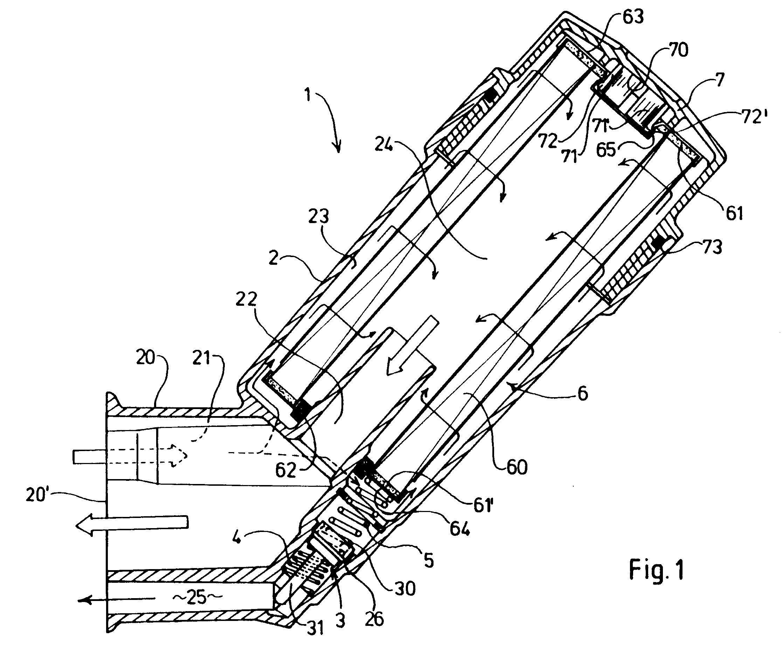

Wie die Figur 1 der Zeichnung zeigt, besteht das dargestellte Ausführungsbeispiel des Ölfilters 1 im wesentlichen aus einem Filtergehäuse 2 mit Sockel 20, einer in das Gehäuse 2 eingesetzten, auswechselbaren Ölfilterpatrone 6 und einem das Gehäuse oberseitig abschließenden Schraubdeckel 7. Die Längsachse des Filtergehäuses 2 verläuft schräg nach oben weisend, so daß sich eine annähernd stehende Lage des Filtergehäuses 2 ergibt. Der Sockel 20 des Filtergehäuses 2 ist gegenüber der Längsachse des Gehäuses 2 abgewinkelt und endet in einer im wesentlichen vertikal verlaufenden Flanschfläche 20', die zur Verbindung des Ölfilters 1 mit einem nicht dargestellten Verbrennungsmotor eines Kraftfahrzeuges dient. Weiterhin dient der Sockel 20, wie durch Strömungspfeile angedeutet, zur Zuführung und Abführung von Öl. Verschmutztes Öl gelangt durch einen Öleinlaß 21 im hinteren, oberen Teil des Sockels 20 in einen die Filterpatrone 6 umgebenden Einlaßraum 23 und verteilt sich dort über den Umfang der Patrone 6. Nach dem Durchströmen der Filterpatrone 6, genauer deren Filterstoffkörpers 60, sammelt sich das nunmehr gereinigte Öl im Innenbereich 24 des Filters 1 und strömt von dort - entsprechend den eingezeichneten Strömungspfeilen - durch einen zentralen Ölauslaß 22 und den Sockel 20 wieder ab. Der Einlaßraum 23 und der Innenbereich 24 des Ölfilters 1 sind dabei durch einen Dichtring 62, vorzugsweise aus Gummi, am unteren Stirnende 64 der Filterpatrone 6 und durch den Deckel 7 am oberen Stirnende 63 der Patrone 6 voneinander getrennt.

Im unteren Teil des Sockels 20 verläuft ein Ableitungskanal 25, der dazu dient, das in dem Gehäuse 2 des Ölfilters 1 befindliche Öl beim Austausch der Filterpatrone 6 abzuleiten. Im normalen Betrieb des Ölfilters 1, d. h. bei eingesetzter Filterpatrone 6, soll der Ableitungskanal 25 dagegen gesperrt sein. Hierzu ist in den Ableitungskanal 25 unterhalb der Filterpatrone 6 ein Ventilkörper 3 eingesetzt, der zusammen mit einem Einsprung 26 des Kanals 25 ein Ventil bildet. Der Ventilkörper 3 ist rotationssymmetrisch ausgebildet und besitzt einen der Filterpatrone 6 zugewandten verbreiterten Kopf 30 und ein von diesem sich nach unten in den Kanal 25 erstreckendes dünneres Führungsende 31. In der in Figur 1 dargestellten Funktionsstellung des Ölfilters 1, d. h. bei eingesetzter Filterpatrone 6 und fest aufgeschraubtem Deckel 7, wird der Ventilkörper 3 mittels einer zwischen dem Kopf 30 des Ventilkörpers 3 und der unteren Stirnfläche 64 der Filterpatrone 6 angeordnete Schraubenfeder 5 in seine Schließstellung gedrückt.

Unterhalb des Kopfes 30 des Ventilkörpers 3 ist eine weitere Feder 4, hier eine konische Schraubenfeder, erkennbar, die schwächer ausgeführt ist als die zuvor erwähnte Feder 5. Die Feder 4 sorgt für eine Vorbelastung des Ventilkörpers 3 in dessen Öffnungsrichtung, wobei jedoch in dem Zustand des Ölfilters 1 gemäß Figur 1 die von der Feder 4 erzeugte Kraft kleiner ist als die von der Feder 5 auf den Ventilkörper 3 ausgeübte Kraft, so daß letzterer seine Schließstellung einnimmt.

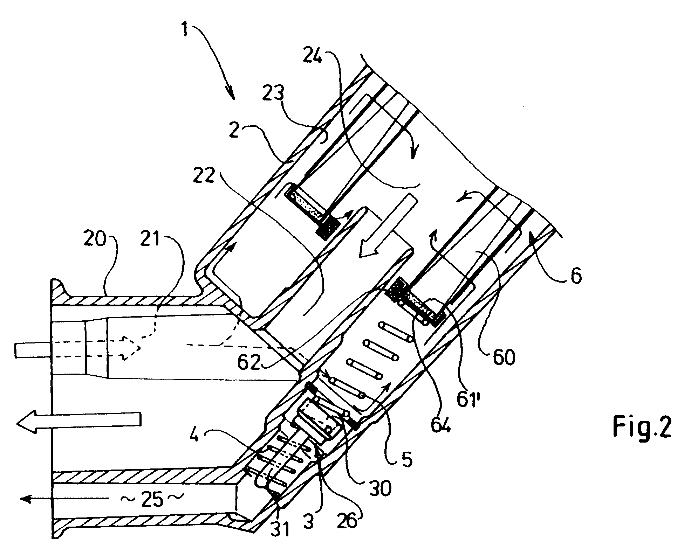

Bei einem Herausziehen der Filterpatrone 6 aus dem Gehäuse 2 des Ölfilters 1 wird die obere, stärkere Feder 5 entlastet so daß die durch diese Feder 5 auf den Ventilkörper 3 ausgebüte Kraft sich verringert und schließlich ganz entfällt. Hierdurch wird die Feder 4 in die Lage versetzt, den Ventilkörper 3 in seine Öffnungsstellung zu bewegen. Dieser Zustand des Ölfilters 1 ist in der Figur 2 der Zeichnung dargestellt. Wie aus dieser Figur 2 ersichtlich ist, ist hier die Filterpatrone um ein gewisses Stück relativ zu dem Filtergehäuse 2 nach oben verschoben. Der Dichtring 62 ist nunmehr frei, so daß der Einlaßraum 23 und der Innenbereich 24 des Filtergehäuses 2 miteinander in Verbindung stehen. Durch die von der Feder 4 bewirkte Verschiebung nach oben des Ventilkörpers 3 im Ableitungskanal 25 ist dieser nunmehr geöffnet und erlaubt ein Abströmen von Öl aus dem Inneren des Filtergehäuses 2 sowohl aus dem Einlaßraum 23 als auch aus dem Innenbereich 24. Hiermit wird erreicht, daß bei einem Wechseln der Filterpatrone 6 nur eine sehr geringe Ölmenge mitgeführt wird, was die Gefahr von Umweltverschmutzungen durch Öl wesentlich vermindert.

Zur Sicherstellung einer ordnungsgemäßen Funktion des Ventilkörpers 3 ist die Ausübung einer axialen Kraft auf die Feder 5 durch die Filterpatrone 6 erforderlich. Um diese in ihrer Lage gemäß Figur 1 zu sichern, ist der bereits erwähnte Deckel 7 des Filtergehäuses 2 so ausgeführt, daß er an der ihm zugewandten Stirnseite 63 der Filterpatrone 6 anliegt und auf diese eine axiale Kraft ausübt. Weiterhin ist bei dem Ausführungsbeispiel des Ölfilters 1 nach Figur 1 vorgesehen, daß die Filterpatrone 6 und der Deckel 7 lösbar miteinander verbunden sind. Hierzu besitzt der Deckel 7 an seiner Innenseite 70 mehrere Federzungen 71 und 71', von denen in Figur 1 zwei sichtbar sind. Die Federzungen 71 und 71' sind auf einem zur Längsachse des Filtergehäuses 2 konzentrischen Kreis angeordnet und ragen von der Deckelinnenseite 70 in das Innere des Filtergehäuses 2. An ihrem inneren Ende besitzen die Federzungen 71 und 71' nach außen vorstehende Rastvorsprünge 72 und 72', die bei in das Gehäuse 2 eingesetzter Filterpatrone 6 in eine passende, taillierte Rastvertiefung 65 in der oberen Stirnseite 63 der Filterpatrone 6 eingreifen. Hierdurch wird erreicht, daß von dem Deckel 7 axiale Kräfte in beiden Richtungen auf die Filterpatrone 6 überträgen werden können. Die Verbindung des Deckels 7 mit dem Filtergehäuse 2 erfolgt bei dem hier dargestellten Ausführungsbeispiel des Ölfilters 1 unter Zwischenlage eines Dichtringes 73 durch Verschrauben.

Schließlich zeigt die Figur 1 noch je einen Vergußmassekörper 61 bzw. 61' am oberen und unteren Stirnende 63 und 64 der Filterpatrone 6, in welche der Filterstoffkörper 60 stirnseitig eingebettet ist.

## Patentansprüche

1. Ölfilter für die Reinigung vopn Schmieröl, insbesondere für Verbrennungsmotoren von Kraftfahrzeugen, mit einem im Einbauzustand zumindest annähernd stehend angeordneten Filtergehäuse (2) mit einem mit diesem verschraubbaren Deckel (7), ferner mit einer in das Filtergehäuse (2) eingesetzten ringförmigen Ölfilterpatrone (6), ferner mit einem Ölenlaß für die Ölfilterpatrone umströmendes, verunreinigtes Öl und mit einem mit dem zentralen Innenbereich des Filtergehäuses verbundenen Ölauslaß für gereinigtes Öl in einem Sokkel (20) am unteren Ende des Filtergehäuses (2), ferner mit einem durch Herausnehmen der Ölfilterpatrone (6) mit dem Einlaßraum des Filtergehäuses verbindbaren Ableitungskanal (25) am unteren Ende des Filtergehäuses (2) und mit einem Verschlußglied, das den Ableitungskanal (25) gegenüber dem Filtergehäuse (2) verschließt, wobei das Verschlußglied ein in dem Ableitungskanal (25) in axialer Richtung verschieblicher Ventilkörper (3) ist, der zusammen mit wenigstens einem Einsprung (26) des Ableitungskanals (25) ein Ventil bildet, wobei der Ventilkörper (2) durch eine erste, schwächere Feder (4) in Öffnungsrichtung vorbelastet ist und
der Ventilkörper (3) in Schließrichtung durch eine zweite, stärkere Feder (5) vorbelastet ist, die sich bei in das Filtergehäuse (2) eingesetzter Filterpatrone (6) an deren dem Ventilkörper (3) zugewandter Stirnseite (64) abstützt,
dadurch gekennzeichnet, daß sich der Deckel (7) über mindestens ein Abstützglied auf der deckelzugewandten Stirnseite (63) an der in das Gehäuse (2) eingesetzten Filterpatrone (6) im direkten Kontakt abstützt und so die Innenfläche (70) des Deckels (7) eine in axialer Richtung wirkende Kraft auf die Filterpatrone ausübt und der Deckel (7) und die Filterpatrone (6) eine Übertragung von axialen Kräften von beiden Richtungen auf die Filterpatrone (6) ermöglichend miteinander verrastet sind.

2. Ölfilter nach Anspruch 1, dadurch gekennzeichnet, daß der Deckel (7) an seiner Innenseite (70) mehrere auf einem Kreis angeordnete, in das Filterinnere (24) vorragende Federzungen (71, 71') mit Rastvorsprüngen (72, 72') aufweist und daß die Filterpatrone (6) an ihrem deckelseitigen Ende eine kreisförmige oder mehrere auf einem Kreis angeordnete Rastausnehmungen (65) für die Rastvorsprünge (72, 72') aufweist.

3. Ölfilter nach einem der Ansprüche 1 und 2, dadurch gekennzeichnet, daß die Rastausnehmungen (65) in der Filterpatrone (6) eine kreisrunde, taillierte Vertiefung in der Stirnseite (63) der Patrone (6) bilden.

## Claims

1. An oil filter for cleaning lubricating oil, in particular for internal combustion engines of motor vehicles, with a filter housing (2) with a cover (7) which can be screw-connected therewith, which filter housing in the assembled state is arranged at least approximately vertically, furthermore with an annular oil filter cartridge (6) inserted into the filter housing (2), furthermore with an oil inlet for contaminated oil flowing around the oil filter cartridge and with an oil outlet connected to the central inner region of the filter housing in a base (20) at the lower end of the filter housing (2), furthermore with a drainage channel (25) at the lower end of the filter housing (2), which channel can be connected to the inlet chamber of the filter housing by removing the oil filter cartridge (6), and with a sealing member which seals off the drainage channel (25) from the filter housing (2), the sealing member being a valve member (3) which can be displaced in the drainage channel (25) in the axial direction, which member together with at least one contraction (26) of the drainage channel (25) forms a valve,
the valve member (2) being biased by a first, weaker spring (4) in the direction of opening and the valve member (3) being biased in the closing direction by a second, stronger spring (5) which when the filter cartridge (6) is inserted into the filter housing (2) is supported on the end face (64) of said cartridge facing the valve body (3),
characterised in that the cover (7) is supported on the filter cartridge (6) inserted into the housing (2) in direct contact via at least one supporting member on the end face (63) facing the cover and thus the inner face (70) of the cover (7) exerts a force acting in the axial direction on the filter cartridge and the cover (7) and the filter cartridge (6) are locked together, permitting a transmission of axial forces from both directions to the filter cartridge (6).

2. An oil filter according to Claim 1, characterised in that the cover (7) has on its inside (70) a plurality of spring tongues (71, 71') with catch projections (72, 72') arranged in a circle and projecting into the interior of the filter (24) and that the filter cartridge (6) on its cover-side end has one circular catch recess or a plurality of catch recesses (65) arranged in a circle for the catch projections (72, 72').

3. An oil filter according to one of Claims 1 and 2, characterised in that the catch recesses (65) form in the filter cartridge (6) a circular, waisted recess in the end face (63) of the cartridge (6).

## Revendications

1. Filtre à huile pour la purification de l'huile de lubrification, en particulier pour moteurs à combustion interne de véhicules automobiles, comportant, à l'état monté, un boîtier (2) de filtre au moins approximativement disposé verticalement, doté d'un couvercle (7) susceptible d'être vissé sur lui, comportant en outre une cartouche (6) de filtration d'huile de forme annulaire mise en place dans le boîtier (2) de filtre, comportant de plus une entrée d'huile destinée à l'huile souillée qui s'écoule autour de la cartouche de filtration d'huile, et une sortie d'huile reliée à la zone intérieure centrale du boîtier de filtre destinée à l'huile purifiée, située dans un socle (20), à l'extrémité inférieure du boîtier (2) de filtre, comportant également un canal d'évacuation (25) situé à l'extrémité inférieure du boîtier (2) de filtre, susceptible d'être relié à l'espace d'entrée du boîtier de filtre, et un élément de fermeture qui ferme le canal d'évacuation (25) par rapport au boîtier (2) de filtre, l'élément de fermeture étant un corps de soupape (3) qui est susceptible d'être déplacé dans le canal d'évacuation (25) dans le sens axial et qui forme une valve avec au moins une saillie (26) dirigée vers l'intérieur du canal d'évacuation (25),
le corps de soupape (3) étant placé sous la contrainte préalable, dans le sens de l'ouverture, d'un premier ressort (4) relativement faible, et le corps de soupape (3) étant placé sous la contrainte préalable, dans le sens de la fermeture, d'un second ressort (5) plus puissant qui s'appuie, lorsque la cartouche de filtration (6) est mise en place dans le boîtier (2) de filtre, sur le côté frontal (64) de celle-ci dirigé vers le corps de soupape (3),
caractérisé en ce que le couvercle (7) s appuie par l'intermédiaire d'au moins un élément d'appui sur le côté frontal (63) orienté vers le couvercle, en contact direct avec la cartouche de filtration (6) mise en place dans le boîtier (2) et qu'ainsi la surface intérieure (70) du couvercle (7) exerce une force qui agit sur la cartouche de filtration dans le sens axial et que le couvercle (7) et la cartouche de filtration (6) sont encliquetés l'un avec l'autre, en permettant une transmission, dans les deux sens, des forces axiales sur la cartouche de filtration 6.

2. Filtre à huile selon la revendication 1, caractérisé en ce que le couvercle (7) présente sur son côté intérieur (70) plusieurs dents (71, 71') formant ressorts dotées de saillies d'encliquetage (72, 72'), qui sont disposées en cercle et qui dépassent dans l'intérieur du filtre, et en ce que la cartouche de filtration (6) présente sur son extrémité orientée du côté du couvercle un évidement d'encliquetage de forme circulaire, ou plusieurs évidements d'encliquetage (65) disposés sur un cercle, destinés aux saillies (72, 72') d'encliquetage.

3. Filtre à huile selon l'une des revendications 1 ou 2, caractérisé en ce que les évidements d'encliquetage (65) de la cartouche de filtration (6) forment un évidement circulaire découpé dans le côté frontal (63) de la cartouche (6).
